Europäisches Patentamt

(19) European Patent Office

Office européen des brevets

(11) EP 0 928 737 A1

(12) EUROPEAN PATENT APPLICATION

(43) Date of publication:
14.07.1999 Bulletin 1999/28

(51) Int. Cl.⁶: B62M 23/02, B62K 5/04

(21) Application number: 98121714.4

(22) Date of filing: 13.11.1998

(84) Designated Contracting States:
AT BE CH CY DE DK ES FI FR GB GR IE IT LI LU MC NL PT SE
Designated Extension States:
AL LT LV MK RO SI

(30) Priority: 14.11.1997 CN 97244195

(71) Applicants:
• TSINGHUA UNIVERSITY
Beijing 100084 (CN)
• Jiangsu (Sun Way Group),
Feida Co. Ltd.
224100 Dafeng, Jiangsu (CN)

(72) Inventors:
• Guilong, Ma
Haidian District, Beijing (CN)
• Jingyuan, Huang
Haidian District, Beijing (CN)
• Bangding, Yang
Dafeng, Jiangsu (CN)
• Youxiang, li
Haidian District, Beijing (CN)
• Shewen, Hu
Haidian District, Beijing (CN)
• Mingcai, Li
Dafeng, Jiangsu (CN)
• Chunfu, Chen
Dafeng, Jiangsu (CN)
• Lei, Yang
Dafeng, Jiangsu (CN)
• Yaofei, Huang
Dafeng, Jiangsu (CN)
• Qi, Qian
Haidian District, Beijing (CN)
• Chunlin, Fu
Haidian District, Beijing (CN)
• Xu, Wang
Haidian District, Beijing (CN)
• Jihong, Zhang
Haidian District, Beijing (CN)
• Guangzhi, Du
Haidian District, Beijing (CN)

(74) Representative:
Stoffregen, Hans-Herbert, Dr. Dipl.-Phys.
Patentanwalt
Postfach 21 44
63411 Hanau (DE)

(54) An electric-assisted tricycle

(57) The new invention deals with the field of construction of a electric-assisted tricycle. The new invention includes a rockable handlebar (11), an intermediate transition axle system (17) and two rear wheels (16). It features that one of the two mentioned rear wheels (16) is an electric power wheel mounted with an electric power driven hub (161), and the other is a manpower wheel. It features also that it includes an intermediate transistion axle system (17) equipped with a force-measuring device, a speed-measuring device and a microcomputer control unit, automatically controlling the extent of electric assisted power. The new invention has the advantages of high transmission efficiency, light weight and simplicity in construction. It is able to adjust the electric-assisted power automatically, depending on the rider's pedaling force and the speed of the tricycle, achieving the goal of both physical exercising and ensuring the safety.

Fig. 1

## Description

The invention relates to an electric-assisted tricycle including a front body that consists of a front frame, a handlebar, a front wheel, a seat and pedals, and a rear body that consists of two rear wheels, a chassis and a rear frame, and an axle at the end of the front frame of the front body is inserted and fixed to a sleeve on the chassis at the rear body, thus making the front and rear body as a whole.

Electric-assisted bicycles have got user's favorable comments by its striking merits such as economy in manpower, economy in electric energy, being free of pollution and light weight. In 1996 Tsinghua University presented to the Bureau of Patents of China a new utility model patent (96216048.2) and got the patent right on June 7, 1997. In the patent a new type of electric-assisted bicycle, replacing conventional ones has been proclaimed. The electric-assisted bicycle has the advantages of high efficiency of the electric motor and light weight. One-wheel-drive or two-wheel-drive mode can be selected freely depending on different road and wind conditions.

The aim of the current new patent application is to extend the electric-assisted bicycle to the field of light tricycle in order to save manpower, make riding easier and safer. It is suitable for woman, aged persons and persons weak in legs and feet. Furthermore it can adjust the electric-assisted power automatically according to the pedaling force of the rider and the speed of the tricycle. Thus the driver not only keeps an appropriate pedaling force, but also attains the goal of physical exercises.

The new invention deals with the field of construction of an electric-assisted tricycle, including a front body, which consists of a front frame, a handlebar, a front wheel, a seat and pedals, and a rear body, which consists of two rear wheels, a chassis and a rear frame. An axle at the end of front frame if inserted and fixed into an axle sleeve on the chassis of the rear body, making the front and rear body as a whole. It features that one of the mentioned rear wheels is an electric power wheel installed with an electric hub, and the other is a manpower wheel driven by the pedals through a chain transmission.

It is including also a force-measuring unit, a speed-measuring unit and an intermediate transition axle system with chain wheels at two ends. The intermediate transition axle has a right chain wheel connected with a pedal chain wheel on the front body, and a left chain wheel connected with the manpower wheel on the rear body.

On the chassis a microcomputer control unit is mounted to control the extent of electric-assisted power. The mentioned axle at the end of front body is connected with a rocking block at an appropraite place. The mentioned rear axle sleeve has a V-shaped slot, the opening of which if adjustable. The rocking block can rock in the V-shaped slot to a small angle, the size of which is adjustable, so the front body can rock and make it easy to turn around.

The mentioned microcomputer control unit consists of a singlechip and related speed signal detecting unit, manpower signal detecting unit and electric power signal detecting unit. The output control signal from the mentioned single-chip microcomputer is amplified to control the output power of the wheel hub motor. The mentioned microcomputer is amplified to control the output power of the wheel hub motor.

The mentioned microcomputer unit also includes an autoswitching unit for switching between the "Work Mode" and "Rest Mode" of the microcomputer.

The new invention operates as follows: while riding the tricycle, a force is applied to the pedals, the resultant force of the pedals and the tensile force of the chain acts on intermediate transition axle, forming a small rotation of the latter. With the help of a mechanical lever the small rotation yields an enlarged displacement, proportional to the pedaling force. A displacement sensor measures the extent of the displacement, thus measuring the manpower. From the manpower-measuring unit the signal is input to the microcomputer; besides riding the tricycle, the speed-measuring unit mounted coaxially with the intermediate transition axle receives the rotation signal from a speed disk and transfers it to the speed-measuring unit. On the basis of the transmission relation, the speed of the tricycle can be determined and the speed signal is also input to the microcomputer; the detecting of electric power is based on the fact that the output power of a permanent-magnet DC motor can expressed by the extent of the armature current. Measuring the armature current determines the output electric power. Based on the manpower signal, speed signal, electric power signal and a pre-set value of Assisted Power Ratio, a single-chip microcomputer outputs a control signal, which is amplified and used to control the output power of the motor, attaining a comfortable riding with the autocompensation based on measured manpower and tricycle speed.

For the sake of further saving the power, the microcomputer control unit of the invention also includes a control circuit to automatically switch between the "Work Mode" and "Rest Mode". While riding the tricycle, the microcomputer enters into the "Rest Mode" and the microcomputer control unit has the minimum work current. The two modes can be switched automatically between each other.

The body of the new invention is the same as conventional tricycles bodies. As a power source a Lead-Acid Maintenance-free battery can be used; A Ni-Cd battery or other types of battery can also he used.

The new invention has the following distinguishing features;

1. It can be driven by manpower and electric power simultaneously, saving the manpower in riding. Manpower drives the tricycle through pedals and a chain transmission. While riding, a sensor system detects the pedaling force signal and speed signal, inputs them to a microcomputer. The microcomputer controls the output power to an electric-driven hub, depending on the input signals, thus assisting the manpower drive.

2. A proper ratio between electric power output and manpower has been established. With a speed range of 0 to 9 Km/h, the electric power and manpower always keep a fixed ratio. Within a speed range of 9 to 5 km/h, the relative proportion of electric power in the whole driving power decreases as the tricycle speed increases, and finally reduces to zero, ensuring the safety in riding.

3. Simplicity and lightness in construction.

4. High transmission efficiency and economy in power.

5. No pollution.

Further details, advantages and features of the invention are shown not only in the claims and in the features therein, singly and/or in combination, but also in the following description of design examples shown in the drawings, wherein:

Fig. 1    is a scheme of the overall construction of an embodiment of the new utility model.

Fig. 2    is a scheme of the rockable construction of the tricycle handlebar of the embodiment.

Fig. 3    is a schematic section of the connection between the front body axle and the rear body sleeve in Fig. 2.

Fig. 4    is a schematic construction of the electric driven hub of the embodiment.

Fig. 5    is a scheme of force-measuring and speed-measuring devices on the intermediate transition axle of the embodiment.

Fig. 6    is a circuits diagram of the microcomputer control unit of the embodiment.

Fig. 7    is a flow chart to the microcomputer control program of the embodi ment.

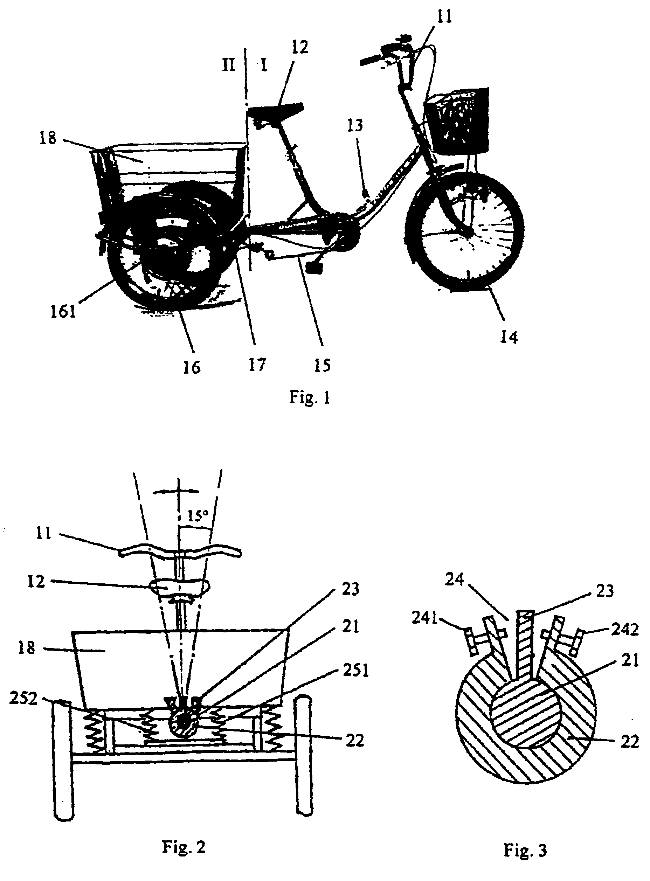

The new invention construes an embodiment of the Electric-Assisted Tricycle as shown in Fig. 1 to Fig. 6.

The overall construction of the embodiment is shown in Fig. 1. The tricycle is combined by two parts; the front body I and rear body II. The handlebar 11, seat 12, pedals 13, front wheel 14 and chain 15 are the same as used in conventional bicycles and can be taken from existing bicycle models. It features that on the axle of one of the rear wheels 16 and electric-driven hub 161 is mounted, also that in the intermediate transition axle system 17 there are force-measuring and speed-measuring devices, at the bottom of the chassis a microcomputer control unit and battery are mounted (not shown in Fig. 1).

The rockable handlebar of the embodiment is shown in Fig. 2. The front body is connected with the axle sleeve 22 on the rear body through an axle 21, which can rotate for a small angle.

The section of the connection of the axle and the sleeve is shown in Fig. 3. At the and of axle 21 there is a rocking block 23, and at the corresponding position on sleeve 22, a V-shaped slot 24.

With the help of screws 241 and 242 at both sides of the slot, the opening of the slot can be adjusted. Thus the front body can rock relatively to the rear body as shown in the figure. The range of rocking is adjustable from 0° to 15°, depending on the riders costum. The aim of this function is to change the fixed construction of the handlebar of a conventional tricycle, making it rockable. This will result in a riding sense as riding a bicycle, especially effective while turning a corner. When the tricycle is not in motion, a pair of balancing springs 251 and 252 will keep the front and rear body in a relatively stable intermediate position.

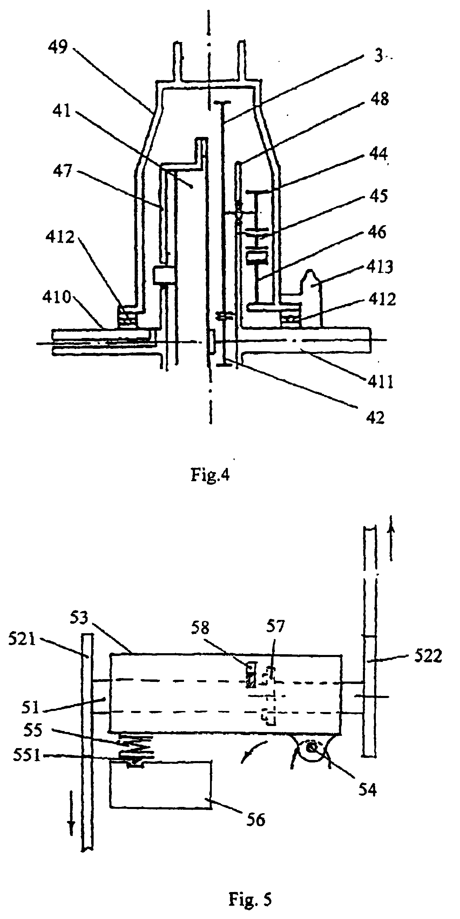

The electric-power-driven hub of the embodiment uses a patent 90109892.2, the construction of which is shown in Fig. 4. With the help of gears 42, 43, 44 and 45, the rotation of a disk-shaped motor 41 inside the wheel hub is transferred after reduction to wheel hub 49, driving the tricycle wheel. The transmission components such as the electric motor and gears are mounted in left and right half-case 47 and 48, which are fixed respectively on front fork and rear fork of the tricycle body through left and right half-axle 410 and 411, 46 in the figure is an one-way clutch 412 a bearing and 413 a free wheel. While the tricycle is driven by manpower only, the motor does not work and the pedal rotates the hub 49 through a chain transmission and a free wheel 413, driving the tricycle wheel. At the same time clutch 46 disconnects entirely the resistance from the motor and gears. While the tricycle is driven by manpower and electric power simultaneously, the rotation of the motor makes the gear 45 meshing with the clutch 46, thus transferring the power to the hub 49, simultaneously utilizing the man-and electric power.

The embodiment includes an intermediate transition axle system equipped with a force-measuring unit and a speed-measuring unit, construction of which is shown in Fig. 5. The intermediate transition axle system consists of a central axle 51, a left chain wheel 521, a fight chain wheel 522 and an axle sleeve 53 (with bearings inside). At the right side of the sleeve there is an opening 54 for a hinge and the sleeve is connected with the rear body through the hinge. At the left side of the sleeve there is a Reset Spring Mechanism 55, connected with the tricycle chassis. A contacting rod 551 in the spring mechansim contacts the displacement sensor 56 directly. A speed disk 57 with thin pieces of magnets is mounted on the central axle 51 in the sleeve. A speed-measuring sensor 58 is fixed on the inner wall of the sleeve. Therefore the whole system consists of the intermediate transition axle, the hinge, the reset spring mechanism, the displacement sensor and the speed-measuring device. When a rider treads pedals, the large chain disk rotates, the resultant force of the pedals and the tensile force chain acts on the right chain wheel of the intermediate transition axle. The rotation of the right chain wheel directly drives the left chain wheel, and the latter rotates the manpower wheel, attaining the manpower driving process. Since the sleeve of the intermediate transition axle is connected with the rear body of the tricycle through a hinge and spring device, the whole sleeve is supported on the tricycle by the hinge and spring device, so when the pedal chain drives the right chain wheel, the sleeve will have a small rotation, which forms a larger displacement at the spring device due to a lever effect. The extent of the displacement can be measured using a displacement sensor mounted behind the spring mechanism, thus the manpower can be measured. The function of the reset spring mechanism is to restore the sleeve and displacement sensor to their initial position while no force is applied to pedals. As for the displacement sensor, a linear Hall Sensor UGN3501, UGN3503 etc. can be used. This simplifies the hardware circuits for signal processing. While a force is applied to the pedals, the displacement sensor gives a displacement signal. The extent of the displacement determines the amplitude of the output voltage and the extent of the manpower can be calculated by the microcomputer.

In Fig. 5 several pieces of magnets are mounted on a speed disk, rotating with the intermediate transition axle. While riding the tricycle, the speed disk rotates synchronously with the intermediate transition axle, the magnetic materials on the speed disk approach and leave away from the speed-measuring sensor successively and correspondingly the sensor forms a series of pulse signals, that are sent to the microcomputer. Based on the pulse-period and the transmission relation of the tricycle the microcomputer determines the speed of tricycle. As for the speed-measuring sensor of the embodiment, a Switch Hall Sensor, Photoelectric or other devices can be used.

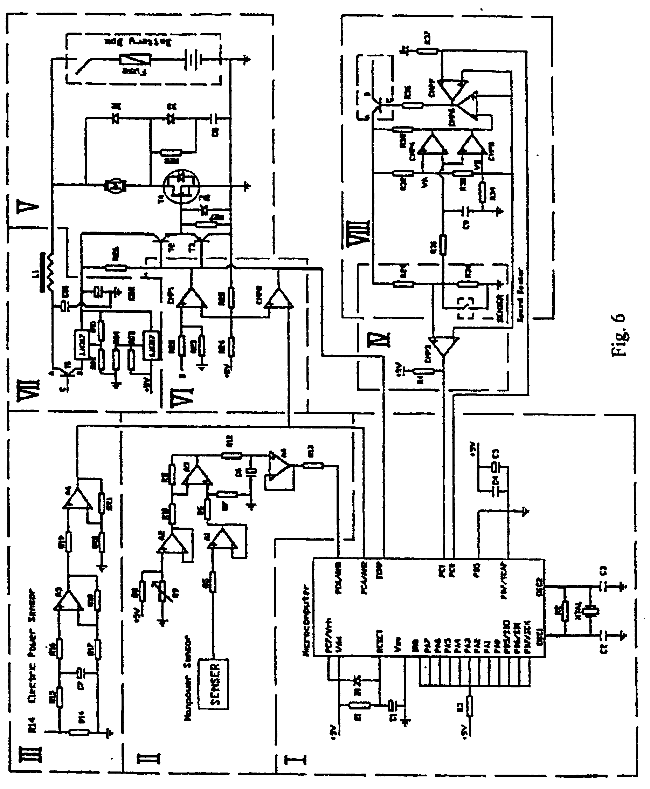

The composition of the microcomputer control unit in the embodiment and circuits scheme are shown in Fig. 6.

The unit consists of eight parts: Single-chip microcomputer I, manpower signal interface circuit II, electric power signal interface circuit III, speed interface circuit IV, power amplifier circuit V, protection circuit VI, power source circuit VII and working mode control circuit VIII, all shown in Fig. 6 separated by dotted lines.

Every part and their functions are described as follows:

## Microcomputer Unit

The unit consists of only one chip of integrated circuits, a single-chip microcomputer and a few peripheral circuits (reset circuits R1, D1, C1, quartz crystal XTAL of an oscillating circuit, condensers C2 and C3). As for the single-chip microcomputer a MOTOROLA MC6805P6, MICROCHIP PIC16C71, PIC16C73 and Japanese HITACHI HD404393 etc. can be used. All of them have the distinguishing features that not extended memory and no extended A/D converter circuit is needed, also with small volume and low power consumption.

## Manpower Signal Interface Circuit

As mentioned above the detecting process of manpower is: through the force-measuring device in intermediate transition axle system the variation in pedaling force is converted to the displacement, and then with the help of the sensor, converted to voltage. The function of Manpower Signal Interface Circuit is calculating the variation of the output voltage from the sensor in condition of applied manpower, amplifying them and inputting to the microcomputer. The force applied by a rider to the tricycle is converted to the displacement through the intermediate transition axle system. A Linear Hall-manpower sensor detects the variation of displacement and converts them to the variation of voltage. The circuit, consiting of resistances R5 to R13, condenser C6, operational amplifiers A1, A2, A3 and A4, receives the output voltage from the Hall sensor, calculates the variation, amplifies and then inputs to A/D channel AN0 of the microcomputer. The operational amplifiers A1 to A4 in the Figure are conventional ones, and LM358, LM324 or other replaceable types of chips can be used.

## Electric Power Signal Interface Circuit

The extent of the armature current reflects the output power of a motor. The resistance R14, series connected in the armature loop converts the extent of the current to voltage. The interface circuit, consisting of R15 to R21, C7, A5 and A6 filters and amplifies the voltage and sends to A/D channel AN2 of the microcomputer. As for the operational amplifiers A5, A6 a LM358 or its replaceable types of chips can be used.

## Speed Signal Interface Circuit

A magnetically controlled switch is used as a speed sensor. When the magnetic material approaches the switch, the magnetic field increases and the switch is on; when the magnetic material leaves away, the magnetic field weakens, the switch off, thus forming a series of pluses. Comparator CMP3 with open collector loop adjusts the pulses reflecting the speed signal to proper amplitudes, sends them to the microcomputer. The Speed Signal Interface Circuit consists of R4, R29, R30 and CMP3. A speed sensor (Hall switch) is mounted on the intermediate transition axle. When the rider treads the tricycle, the Hall switch will be on and off successively. The voltage of R30 varies and the comparator CMP3 converts the voltage of R30 to regular pulse of amplitude of 5V and sends them to microcomputer PC1. As for the comparator CMP3, a LM339, LM393 or other replaceable types of chips can be used.

## Power Amplifying Circuit

The Power Amplifying Circuit consists of R26, T2, T3, R27, DW, T4, C8, D2 and D3. From the TCMP end the microcomputer outputs the pulse-control signals, which are amplified by a push-and-pull circuit consisting of T2, T3 and R23, and drive a large power VDMOS transistor to fast "on" or "off', thus controlling the output power of the motor. D2 is the leakage channel when T4 is cut off. The absorbing network consisting of R28, D3 and C8 absorbs the reverse emf formed by the motor coils when T4 is cut off, thus preventing effectively the drain of VDMOS from break down. The efficiency of the motor driving circuit-the power amplifier is an important factor affecting the power efficiency of an electric-assisted tricycle.

The power amplifier has the following distinguishing features:

(1) A PWM control mode is used In the mode the power transistor works in "On" and "Off' states. When the power transistor is in fully conducting state, though the current in it is great, the voltage drop is small, and the transistor has low power consumption. When the transistor is cut off, the leakage current in it is small, though the voltage drop is great, the power consumption P=UI is still small.
(2) A VDMOS power transistor with minimum conducting resistance, low voltage and heavy current is used. In this type of transistor, when it is cut off, the leakage current is small, so the power comsumption is minimum; when it is in fully conducting state, due to the very small conducting resistance, the voltage drop is small, thus also the small power consumption.
(3) High-efficiency driving circuit In PWM working mode the power consumption of the power transistor is small while in "fully conducting" or "fully cut off" state. However, in its process of "On" or "Off', the power consumption is relatively large. Therefore a driving circuit that makes the power transistor fast on and fast off is also an important measure to ensure the high efficiency of the power amplifying circuit.

## Protection Circuit

The protection circuit consists of R22 to R25, comparators CMP1 and CMP2. When the battery's voltage is to low, CMP1 outputs a low level, turns the control pulses of the power amplifier off and prevents the battery from continuing discharge, providing the protection for the battery. When the current in the motor exceeds an assigned value, CMP2 outputs a low level, turns the VDMOS transistor T4 off, providing the overload protection function.

## Power Source Circuit

The power source circuit consisting of two LM317, R01 to R04, L1, C01 and C02, outputs stable voltages of +5V and +12V, providing power source for the microcomputer and power amplifier circuits.

## Work Mode Control Circuit

Since a single-chip microcomputer is used, the working current of the microcomputer control system is less than 30mA. However, when the electric assisted tricycle is not in work, a long period current of 20-30mA still discharges the battery, wasting electric power. Therefore a "Non-working Mode-Rest Mode" is specially designed for the microcomputer control system. The Rest Mode and the Work Mode can be switched to each other automatically. While riding the tricycle, the microcomputer enters into Work Mode, starting work, and the whole control circuit is provided with the power. While not riding, the microcomputer enters into Rest Mode automatically after 30 seconds, and the power source for the power amplifier and microcomputer circuits is turned off, reducing the working current of the whole control system to minimum, thus reducing the power consumption and protecting the battery. The switch circuit consists of the speed sensor (Hall Switch), R29 to R37, CMP4 to CMP7 and T1. When the rider treads the tricycle, the voltage in R30 varies continuously, the voltage in C9 will be Va or below Vb, CMP4 and CMP6-low level, T1 is in conducting state and the power is provided to the control circuit. Otherwise the voltage in R30 does not vary, the voltage in C9 is greater than VA or smaller than VB, CMP4 of CMP5 outputs a low level, CMP6- high level, T1 is off and the power for the control circuit is turned off.

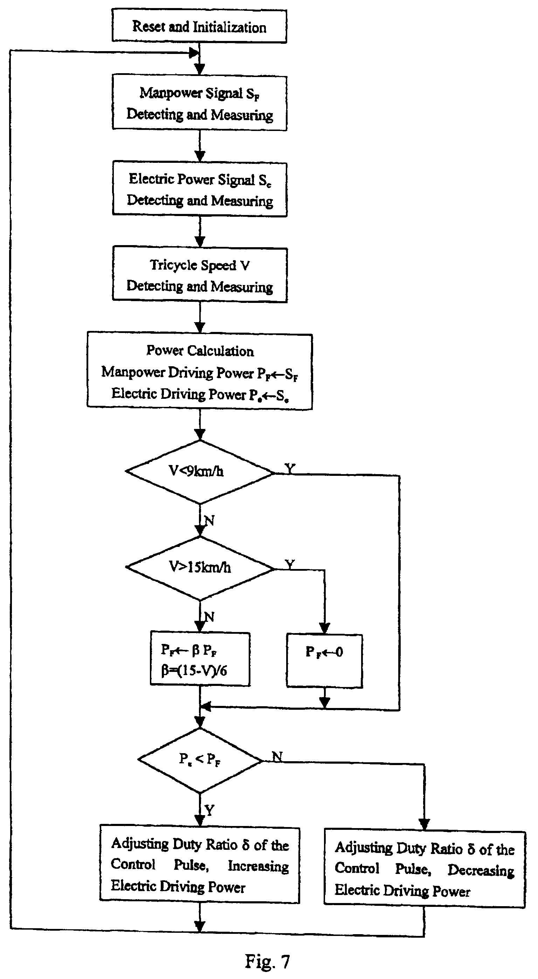

The embodiment establishes, when the speed of tricycle is less than 9 km/h, the proportion of electric power to manpower is 1:1. When the speed is in the range of 9 - 15 km/h, the portion of electric-assisted power in the total driving power will decrease gradually from 50% to zero as the speed of tricycle increases. When the speed is greater than 15 km/h, no electric power is permitted for the sake of safety. To achieve the matched relation the manpower must be measured and adjusted according to the speed, and input to the microcomputer as given values. The microcomputer outputs motor-driving signals and electric power output is then measured, the microcomputer software carries on feedback control for the electric power, achieving the matching relation between electric and manpower. The flow chart of the microcomputer control program is shown in Fig. 7. Since the match between manpower and electric power is used to control the matching relation in total driving power, a power is needed and the electric power is controlled by changing the duty ratio. When the speed V of tricycle is in the range of 9 km/h < V < 15 km/h, the portion of electric power in the driving power will decrease as the speed increases, so in this range the manpower driving is multiplied by a coefficient $\beta$ and $\beta=9-V/6$. In the feedback control process, the man-driving power is taken as a given value, and the electric driving power PT is an output value. This is a process of output feedback.

## Claims

1. An electric-assisted tricycle includes a front body that consists of a front frame, a handlebar, a front wheel, a seat and pedals, and a rear body that consists of two rear wheels, a chassis and a rear frame, and an axle at the end of the front frame of the front body is inserted and fixed to a sleeve on the chassis at the rear body, thus making the front and rear body as a whole,
   **wherein**
   one of the mentioned rear wheels is an electricpower wheel mounted with an electric driven hub and the other is a manpower wheel driven by the pedals through a chain transmission.

2. An electric-sssisted tricycle according to Claim 1,
   **wherein**
   one of the mentioned chassis of the tricycle comprises an intermediate transition axle system, consisting of a force-measuring unit, a speedmeasuring unit and an intermediate transition axle with chain wheels at both sides.

3. An electric-assisted tricycle according to Claim 1 or 2,
   **wherein**
   the mentioned right chain wheel of the intermediate axle is connected with the pedal chain wheel on the front body, and the left chain wheel is connected with the manpower wheel on the rear body.

4. An electric-assisted tricycle according to at least one of the proceding claims,
   **wherein**
   the chassis comprises also a microcomputer control unit automatically controlling the extent of electric-assisted power.

5. An electric-assisted tricycle according to at least one of the proceding claims,
   **wherein**
   the axle has a rocking block at a proper place and at the end of the front frame, the corresponding position of the mentioned rear sleeve is a V-shaped slot, the opening of which is adjustable and the rocking block can rock in the V-shaped slot to a small adjustable angle, forming a rockable handlebar, making the turning of a corner easy.

6. An electric-assisted tricycle according to at least one of the proceding claims,
   **wherein**
   the mentioned microcomputer control unit includes a single-chip microcomputer and related speed signal detecting and measuring unit, manpower signal detecting and measuring unit, and electric power signal detecting and measuring unit.

7. An electric-assisted tricycle according to at least one of the proceding claims,
   **wherein**
   the control signal output from the mentioned single-chip microcomputer is amplified and used to control a power amplifying circuit of the hub motor output.

8. An electric-assisted tricycle according to at least one of the proceding claims,
   **wherein**
   the mentioned microcomputer control unit also includes an automatic switching unit between "Work Mode" and "Rest Mode".

Fig. 1

Fig. 2

Fig. 3

Fig.4

Fig. 5

Fig. 6

```
┌─────────────────────────┐
│  Reset and Initialization │
└─────────────────────────┘
            │
            ▼
┌─────────────────────────┐
│   Manpower Signal S_F    │
│  Detecting and Measuring │
└─────────────────────────┘
            │
            ▼
┌─────────────────────────┐
│  Electric Power Signal S_e│
│  Detecting and Measuring │
└─────────────────────────┘
            │
            ▼
┌─────────────────────────┐
│     Tricycle Speed V     │
│  Detecting and Measuring │
└─────────────────────────┘
            │
            ▼
┌──────────────────────────────┐
│      Power Calculation        │
│ Manpower Driving Power P_F←S_F│
│  Electric Driving Power P_e←S_e│
└──────────────────────────────┘
            │
            ▼
         V<9km/h ──── Y ───┐
            │ N            │
            ▼              │
        V>15km/h ── Y ──┐  │
            │ N         │  │
            ▼           ▼  │
    ┌──────────────┐ ┌──────────┐
    │ P_F← β P_F   │ │  P_F←0   │
    │ β=(15-V)/6   │ └──────────┘
    └──────────────┘      │
            │◄────────────┘
            ▼
         P_e < P_F ──── N ────┐
            │ Y               │
            ▼                 ▼
┌────────────────────────┐ ┌────────────────────────┐
│ Adjusting Duty Ratio δ │ │ Adjusting Duty Ratio δ │
│ of the Control Pulse,  │ │ of the Control Pulse,  │
│ Increasing Electric    │ │ Decreasing Electric    │
│ Driving Power          │ │ Driving Power          │
└────────────────────────┘ └────────────────────────┘
```

Fig. 7

10

**European Patent Office**

# EUROPEAN SEARCH REPORT

**Application Number**

EP 98 12 1714

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | US 4 111 274 A (KING ET AL.) 5 September 1978 * column 3, line 37 - line 47; figure 2 * | 1,3 | B62M23/02 B62K5/04 |
| A | US 3 827 519 A (SNIDER, J.R.) 6 August 1974 * column 2, line 20 - line 35; figure 2 * | 1,3 | |
| A | GB 2 082 987 A (G.M.) 17 March 1982 * figure 5 * | 1,5 | |
| A | EP 0 396 073 A (CANDERLE, G.) 7 November 1990 * figure 3 * | 1,7 | |
| A | EP 0 798 204 A (HONDA) 1 October 1997 * abstract * | 2,4,6,7 | |
| | | | **TECHNICAL FIELDS SEARCHED (Int.Cl.6)** |
| | | | B62M B62K |

The present search report has been drawn up for all claims

| Place of search | Date of completion of the search | Examiner |
|---|---|---|
| VIENNA | 25 February 1999 | BAUMGARTNER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

**ANNEX TO THE EUROPEAN SEARCH REPORT**
**ON EUROPEAN PATENT APPLICATION NO.**        EP 98 12 1714

This annex lists the patent family members relating to the patent documents cited in the above-mentioned European search report.
The members are as contained in the European Patent Office EDP file on
The European Patent Office is in no way liable for these particulars which are merely given for the purpose of information.

25-02-1999

| Patent document cited in search report | | Publication date | Patent family member(s) | | Publication date |
|---|---|---|---|---|---|
| US 4111274 | A | 05-09-1978 | NONE | | |
| US 3827519 | A | 06-08-1974 | NONE | | |
| GB 2082987 | A | 17-03-1982 | CA | 1158175 A | 06-12-1983 |
| | | | JP | 1346171 C | 13-11-1986 |
| | | | JP | 57077276 A | 14-05-1982 |
| | | | JP | 61010352 B | 28-03-1986 |
| | | | JP | 1327756 C | 30-07-1986 |
| | | | JP | 60052030 B | 16-11-1985 |
| | | | JP | 60099779 A | 03-06-1985 |
| | | | US | 4437535 A | 20-03-1984 |
| EP 396073 | A | 07-11-1990 | NONE | | |
| EP 798204 | A | 01-10-1997 | JP | 9267790 A | 14-10-1997 |
| | | | CN | 1164495 A | 12-11-1997 |

EPO FORM P0459

For more details about this annex : see Official Journal of the European Patent Office, No. 12/82